# EUROPEAN PATENT SPECIFICATION

(11) **EP 4 393 323 B1**
(45) Date of publication and mention of the grant of the patent: **11.02.2026**
(21) Application number: 23220532.8
(22) Date of filing: 28.12.2023
(51) Int. Cl.: A23P 20/10, A23P 20/17

(54) **METHOD FOR MAKING A DEEP-FRIED SNACK PROVIDED WITH A TEMPURA COATING**
VERFAHREN ZUR HERSTELLUNG EINES FRITIERTEN SNACKS MIT TEMPURA-UMHÜLLUNG
PROCEDE POUR LA PRODUCTION D'UN SNACK FRIT ENROBE AVEC UN REVETEMENT TEMPURA

(30) Priority: 29.12.2022 BE 202206103
(43) Date of publication of application: 03.07.2024
(73) Proprietor: Beltaste Hamont NV, 3930 Hamont (BE)
(72) Inventor: MUYSHONDT, Leon, 3930 Hamont (BE)
(74) Representative: Brantsandpatents bv

(56) References cited:
- EP-A2- 0 650 671
- WO-A1-2011/101664
- WO-A1-2014/128872
- US-A- 4 198 167
- US-A- 4 778 684
- US-B1- 6 335 041

## Description

### TECHNICAL FIELD

The invention relates to a method for making a deep-fried snack provided with a tempura coating, as well as a deep-fried snack provided with such a tempura coating.

### PRIOR ART

A problem with the known tempura is that it does not adhere sufficiently to meat snacks, especially chicken nuggets. Production methods are complex and not cost-efficient.

There is a clear need for an improved method in which a deep-fried snack is coated in tempura, in a cost-efficient manner that also prevents wastage of the tempura, but where the optimal taste, consistency and quality of both the tempura coating and the (meat) snack is also guaranteed.

WO2011101664 and WO2014128872 both describe a batter. US4198167 describes a batter mixer.

The invention seeks to provide a solution to some of the above problems.

### SUMMARY OF THE INVENTION

The invention relates to a method for making a deep-fried snack provided with a tempura coating according to claim 1. Preferred embodiments of the method are set out in the dependent claims.

More specifically, the method comprises the following steps: (a) mixing a tempura mix with water and ice to form a homogeneous tempura using a mixer in a mixing vessel; (b) pumping the homogeneous tempura or part of the tempura from the mixing vessel into a batter applicator by means of a pump system; and (c) immersing a deep-fried snack in the dipping bath, whereby the homogeneous tempura has a temperature between 10°C and 14°C after mixing, and a Bostwick viscosity value between 20 and 27 cm/30 s.

In a second aspect, the invention relates to a deep-fried snack according to claim 12, which is obtained by means of a method of the present invention.

An advantage of the method is that a tempura is obtained with features that are optimal for providing the tempura as a coating on a deep-fried snack: liquid enough to be provided in a dipping bath and thick enough to stay or stick on the snack. In addition, the temperature is ideal to guarantee the quality of the snack and not negatively affect the taste and/or consistency of the snack. The resulting snack therefore has optimal quality, taste and consistency.

The tempura mix and production method of the present invention also makes it possible to form a tempura coating with a crispy texture and a voluminous appearance by frying in oil after being dipped in the tempura. With the tempura mix and production method of the present invention, a deep-fried snack with airy tempura coating with good texture can be easily prepared, which would otherwise require advanced skills and complicated procedures in the conventional art.

### DETAILED DESCRIPTION

The invention relates to a method for making a deep-fried snack provided with a tempura coating, as well as a deep-fried snack provided with such a tempura coating.

The term "Bostwick viscosity value" refers to a viscosity value, as measured with a Bostwick consistometer, whereby the flow path over a certain time of an expanding liquid or paste is measured by means of a physical comparison method.

Unless otherwise defined, all terms used in the description of the invention, including technical and scientific terms, have the meanings as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, this must be understood to mean that the value of the magnitude where the term "approximately" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention relates to a method for making a deep-fried snack provided with a tempura coating.

The method comprising the steps of:
a. mixing a tempura mix with water and ice to form a homogeneous tempura using a mixer in a mixing vessel;
b. pumping the homogeneous tempura or part of the tempura from the mixing vessel into a batter applicator by means of a pump system;
c. immersing a deep-fried snack in the dipping bath.

In an embodiment, the homogeneous tempura after mixing has a temperature of at most 14°C, preferably at most 13.5°C, even more preferably at most 13°C, even more preferably at most 12.5°C, and most preferably at most 12°C.

According to the invention, the homogeneous tempura after mixing has a temperature between 10°C and 14°C,preferably between 10.5°C and 13.5°C, even more preferably between 11°C and 13°C, even more preferably between 11.5°C and 12.5°C.

The temperature of the tempura is, according to the invention, at most 14°C, otherwise CO₂ will disappear from the tempura, resulting in a tough crust and a viscosity variation due to the temperature increase.

According to the invention, the homogeneous tempura after mixing has a Bostwick viscosity value of 27 cm/30 s, even more preferably at most 26 cm/30 s, even more preferably at most 25 cm/30 s, and most preferably at most 24.5 cm/30 s.

The homogeneous tempura after mixing has a Bostwick viscosity value of at least 20 cm /30 s, preferably at least 21 cm/30 s, even more preferably at least 22 cm/30 s, and most preferably at least 22.5 cm/30 s.

According to the invention, the homogeneous tempura after mixing has a Bostwick viscosity value between 20 and 27 cm/30 s, preferably between 21 and 26 cm/30 s, even more preferably between 22 and 25 cm/30 s, and most preferably between 22.5 and 24.5 cm/30 s.

In a first step a) of the method, a tempura mix is mixed with water and ice using a mixer in a mixing vessel until a homogeneous tempura is formed.

The tempura mix according to the present invention preferably comprises flour. Examples of the flour in the tempura mix of this invention are wheat flour, whole wheat flour, barley flour, rye flour, rice flour, sorghum flour and corn flour, with wheat flour and corn flour being preferred. Examples of wheat flour are soft flour, moderate flour, semi-hard flour, hard flour and durum wheat flour, where soft flour is preferred. The flour may have undergone a pressure treatment, a heat-moisture treatment or a dry heat treatment, which, however, is not essential. Each of these types of flour can be used individually or two or more in combination.

The tempura mix according to the present invention preferably comprises starch. Examples of starches in the tempura mix of this invention are unmodified starches such as corn starch, tapioca starch, potato starch, wheat starch and rice starch, and modified starches such as gelatinization products, etherification products, esterification products, cross-linking products and oxidation products of these starches (excluding oil/fat treated starch, which is described below), with wheat starch being preferred. Each of these starches can be used individually or two or more in combination.

The tempura mix of this invention may contain any of the above types of flour and starches alone or a combination of two or more of the above types of flour and starches.

In an embodiment, the tempura mix also comprises one or more raising agents. For example, the raising agent may comprise E450 and/or E500.

In an embodiment, the tempura mix also includes herbs and spices. Non-limiting examples of herbs and spices include salt, pepper, paprika, garlic powder, galangal, cumin and turmeric.

If necessary, the tempura mix of this invention may contain other materials commonly used in tempura mixes, such as baking powders; egg powders such as egg white powders and whole egg powders; proteins; soy sauce powders, fermented herbs, saccharides and amino acids; flavoring substances; nutrients such as vitamins; dyes; and powdered oils and fats. The type and amount of these other materials can be adjusted as needed, depending on the desired properties of the tempura and other factors.

In a preferred embodiment, the tempura mix comprises wheat flour, corn flour, starch, raising agent, herbs and spices. In a further preferred embodiment, the tempura mix comprises wheat flour, corn flour, starch, raising agent, herbs and spices, milk protein and one or more vegetable oil.

Vegetable oil can be chosen from the list of: sunflower oil, rapeseed oil, peanut oil, canola oil, soybean oil, safflower oil, corn oil, sesame oil, rice starch oil. Preferably, the vegetable oil is canola oil.

Milk protein refers to the proteins that naturally occur in milk. There are two main types of milk proteins: casein and whey proteins. The milk protein can be chosen from the list of: milk powder, whey protein powder, and casein powder, preferably the milk protein is whey protein powder. "Milk powder" refers to dehydrated milk from which both casein and whey proteins can be obtained. Milk powder can be used to give a richer taste and extra binding to the tempura. "Whey protein powder" refers to concentrated whey protein. In tempura it can help create a lighter, fluffier texture. "Casein powder" refers to concentrated casein protein. It is less commonly used in tempura, but can be useful for adding structure and improving moisture retention.

These forms of milk protein, and especially whey protein powder, can be used to improve the texture and flavor of tempura. They help create a crispier exterior and a soft, moist interior, which is desirable for dishes like chicken nuggets.

In a specific preferred embodiment, the tempura mix comprises wheat flour, corn flour, wheat starch, raising agent E450 and raising agent E500, salt, white pepper, and turmeric, preferably the tempura coating comprises wheat flour, corn flour, wheat starch, raising agent E450 and raising agent E500, salt, white pepper, and turmeric, canola oil and milk protein.

In a further specific preferred embodiment, the tempura mix comprises:
- wheat flour and corn flour, in a total amount of flour between 60 and 95% by weight, preferably between 70 and 90% by weight,
- starch, preferably wheat starch, in an amount between 1 and 20% by weight, preferably between 1 and 10% by weight,
- raising agent, preferably E450 and E500, in an amount between 1 and 20% by weight, preferably between 1 and 10% by weight,
- herbs and spices, preferably salt, white pepper, and turmeric, in an amount between 1 and 20% by weight, preferably between 1 and 10% by weight.

In a specific preferred embodiment, the tempura mix comprises:
- wheat flour and corn flour, in a total amount of flour between 60 and 95% by weight, preferably between 70 and 90% by weight,
- starch, preferably wheat starch, in an amount between 1 and 20% by weight, preferably between 1 and 10% by weight,
- raising agent, preferably E450 and E500, in an amount between 1 and 20% by weight, preferably between 1 and 10% by weight,
- herbs and spices, preferably salt, white pepper, and turmeric, in an amount between 1 and 20% by weight, preferably between 1 and 10% by weight,
- vegetable oil, preferably canola oil, in an amount between 1 and 20% by weight, preferably between 1 and 10% by weight,
- milk protein, preferably whey protein powder, in an amount between 1 and 20% by weight, preferably between 1 and 10% by weight.

In a preferred embodiment, the tempura mix further comprises maltodextrin, preferably maltodextrin derived from wheat. Preferably, the tempura mix comprises maltodextrin in an amount between 1 and 20% by weight, preferably between 1 and 10% by weight.

Maltodextrin plays an interesting role in the preparation of tempura mix for chicken nuggets. One of the notable benefits of maltodextrin is its contribution to texture. It has the ability to absorb moisture and helps form a light, crispy layer around the chicken during frying. This property is beneficial for achieving that desired crispiness in tempura.

In addition, maltodextrin also functions as a binding agent in the mix, which ensures better cohesion of the ingredients and enables an even coating on the chicken. It offers a slightly sweet taste, which can subtly enhance the overall taste of the tempura without being overpowering. This subtle sweet accent can enrich the taste experience without disrupting the traditional tempura flavor.

Another advantage of maltodextrin is its impact on shelf life. The ability to absorb moisture helps keep the tempura mix fresh for longer, an important aspect for products intended for commercial use or storage. Using maltodextrin can also help reduce the total fat content in the tempura, as it can replace some of the oil normally needed for texture. This aspect may be especially appealing to consumers looking for healthier frying options.

In a particularly preferred embodiment, the tempura mix consists mainly of wheat flour, corn flour, starch, preferably wheat starch, raising agent, preferably E450 and E500, herbs and spices, preferably salt, white pepper, and turmeric, vegetable oil, preferably canola oil, milk protein, preferably whey protein powder and maltodextrin.

According to an embodiment, a scraper rotates in the mixing vessel during the filling of the mixing vessel with the tempura mix and the water and ice, and thus already before mixing step a), preferably at a low speed. This prevents the ingredients from sticking to the walls of the mixing vessel and/or an initial rough mixing of the ingredients is achieved. This low speed can, for example, be a speed of 15-50 rpm, preferably between 20 and 30 rpm, more preferably a speed of approximately 25 rpm. According to a further embodiment, this scraper continues to rotate during mixing step a).

According to an embodiment, a Ferrari mixer is used to mix the tempura mix with water and ice in step a). According to another or further embodiment, the mixer mixes at a speed between 1250 and 1750 rpm, preferably between 1400 and 1600 rpm, more preferably at a speed of approximately 1500 rpm. According to another or further embodiment, the mixer mixes in step a) for 8 to 12 minutes, preferably about 10 minutes, most preferably until the batter ingredients are mixed into a homogeneous batter.

According to a preferred embodiment, a high-shear mixer is used to mix the tempura mix with water and ice in step a).

In a preferred embodiment, the water for mixing has a temperature of at most 11°C, preferably at most 10.5°C, more preferably at most 10°C, even more preferably at most 9.5°C, even more preferably at most 9°C, even more preferably at most 8.5°C, and most preferably at most 8°C. This maximum temperature ensures that the tempura as coating becomes crispy and airy and absorbs less fat.

In a preferred embodiment, the water and the ice are mixed in a mutual mass ratio between 0.5/1 and 1/0.5.

In a more preferred embodiment, the water and the ice are mixed in a mutual mass ratio between 1/1 and 10/1, preferably between 2/1 and 8/1, even more preferably between 3/1 and 6/1, and most preferably in a mass ratio between 4/1 and 5/1.

A lower ratio leads to a viscosity that is too high, which makes the tempura difficult to process. In addition, higher viscosity makes it more difficult to distribute the batter evenly among the ingredients. This can lead to unevenly cooked tempura, with some parts being too thick and others too thin.

A thicker batter will take longer to cook through, which means the tempura will need to stay in the hot oil longer. This can result in excessive oil absorption, which makes the tempura heavier and oilier. Furthermore, too thick a batter layer will disrupt the delicate balance of flavors and often results in a tempura that does not have the characteristic light, crispy texture. Instead, the tempura may become heavy and doughy.

A higher ratio results in a lower viscosity of the batter, making it thinner and more liquid. This affects how the batter adheres to the ingredients to be fried. Additionally, because the batter is thinner, it will cook faster in the hot oil. This can lead to a less crispy texture. The tempura may end up being limp or not completely crispy.

Furthermore, there is a risk of overheating if it comes into contact with the hot oil. This can result in a tempura that browns quickly on the outside, while the inside is not cooked properly.

When talking about percentages by weight or mass of the water, this should be understood as the weight of the water at approx. 8°C.

In a further preferred embodiment, in step a. the tempura mix, water and ice are mixed in the following composition:
- tempura mix, in an amount between 40 and 50% by weight, preferably between 40 and 45% by weight,
- water, in an amount between 40 and 50% by weight, preferably between 45 and 50% by weight,
- ice, in an amount between 5 and 15% by weight, preferably between 8 and 12% by weight.

In a particularly preferred embodiment, the tempura mix is mixed with a total amount of water and ice in a mass ratio between 0.5/1 and 1.5/1, preferably between 0.5/1 and 1/1, even more preferably between 0.7/1 and 0.85/1.

In a second step b) of the method, the homogeneous tempura or part of the tempura is pumped from the mixing vessel into a batter applicator by means of a pump system.

In a preferred embodiment, the batter applicator is provided with a dipping bath, in the form of a reservoir suitable for receiving the homogeneous tempura. In a further preferred embodiment, after pumping it over from the mixing vessel, the tempura is collected in the dipping bath provided in the batter applicator.

If the tempura has stood still for a while before being pumped to the batter applicator, the tempura will be mixed again before pumping to obtain a nice homogeneous tempura again.

Pumping to the batter applicator is done using a flexible impeller pump (FIP 50S Johnson Pump). Pumping over can be done in two phases, where the tempura is first pumped to the batter applicator and in a second phase it is pumped into the dipping bath. Both phases can then be carried out using the same pump. Alternatively, pumping can also be done in one phase, whereby the homogeneous tempura or part of the tempura is pumped from the mixing vessel into a dipping bath of a batter applicator by means of a pump system, preferably by means of a flexible impeller pump. This pump guarantees a very constant flow of the tempura to the batter applicator and is extremely suitable for pumping viscous foodstuffs.

The amount of tempura in the dipping bath of the batter applicator is monitored, wherein pumping of the tempura to or into the batter applicator from the mixing vessel starts when the amount of tempura in the batter applicator falls below a predefined working amount. As a result, filling the batter applicator is automated, and the level and flow of/in the applicator can be easily maintained constant.

In a third step c) of the method, the deep-fried snack is immersed in the tempura. In this process, the tempura coating is provided on the deep-fried snack by immersing it in the tempura, preferably the tempura is provided in a dipping bath.

In an embodiment, the deep-fried snack is immersed using at least one conveyor belt, wherein the deep-fried snack is guided through the tempura in the dipping bath by means of the at least one conveyor belt. The at least one conveyor belt is provided for this purpose in the batter applicator and is positioned in such a way that it runs through the dipping bath.

A deep-fried snack is therefore preferably first applied to the at least one conveyor belt, after which it is transported through the dipping bath by means of a movement of the conveyor belt.

In a preferred embodiment, the deep-fried snack is guided through the tempura in the dipping bath by means of two conveyor belts; the two conveyor belts are preferably suitable for clamping the deep-fried snack.

In this way, the deep-fried snack will not come loose from the conveyor belt during immersion in the dipping bath and remain in the dipping bath.

Preferably, the two conveyor belts move at the same speed. This means that the deep-fried snack will not deform while being immersed in the tempura.

According to the invention, the method comprises the steps of:
a. mixing a tempura mix with water and ice to form a homogeneous tempura using a mixer in a mixing vessel, wherein the tempura mix comprises wheat flour, corn flour, starch, raising agent, herbs and spices;
b. pumping the homogeneous tempura or part of the tempura from the mixing vessel into a batter applicator by means of a pump system, wherein the tempura is collected in a dipping bath provided in the batter applicator; and
c. immersing a deep-fried snack in the dipping bath, wherein the deep-fried snack is guided through the tempura in the dipping bath by means of at least one conveyor belt;
wherein the homogeneous tempura after mixing has a temperature between 10°C and 14°C, preferably between 11 and 13°C, and a Bostwick viscosity value between 20 and 27 cm/30 s, preferably between 22 and 25 cm/30 s.

The deep-fried snack that is provided with a tempura coating using the current method can be any deep-fried snack known in the prior art. In a preferred embodiment, the deep-fried snack is a chicken nugget.

The chicken nugget may comprise any chicken product as known for use in a chicken nugget. Preferably the chicken product is selected from chicken fillet, chicken skins and chicken baader, even more preferably the chicken product comprises a combination of chicken fillet, chicken skins and chicken baader. "Chicken baader" refers to a type of separator meat that is mechanically separated.

In a second aspect, the invention relates to a deep-fried snack provided with a tempura coating.

According to the invention, the deep-fried snack is obtained by means of a method as discussed above in any of the previous embodiments.

According to another or further embodiment, the tempura coating comprises wheat flour, corn flour, starch, raising agent, herbs and spices, and water.

When applying the tempura to the deep-fried snack, it has a temperature between 10°C and 14°C, preferably at a temperature of at most 12°C and a Bostwick viscosity between 20 and 27 cm/30 s, preferably between 22 and 25 cm/ 30 s.

In a further preferred embodiment, the tempura coating comprises wheat flour, corn flour, starch, raising agent, herbs and spices, milk protein and one or more vegetable oils.

In a specific preferred embodiment, the tempura coating comprises wheat flour, corn flour, wheat starch, raising agent E450 and raising agent E500, salt, white pepper, and turmeric, preferably the tempura coating comprises wheat flour, corn flour, wheat starch, raising agent E450 and raising agent E500, salt, white pepper, and turmeric, canola oil and milk protein.

In a further specific preferred embodiment, the tempura coating comprises:
- wheat flour and corn flour, in a total amount of flour between 60 and 95% by weight, preferably between 70 and 90% by weight;
- starch, preferably wheat starch, in an amount between 1 and 20% by weight, preferably between 1 and 10% by weight
- raising agent, preferably E450 and E500, in a total amount between 1 and 20% by weight, preferably between 1 and 10% by weight
- herbs and spices, preferably salt, white pepper, and turmeric, in a total amount between 1 and 20% by weight, preferably between 1 and 10% by weight

In a specific preferred embodiment, the tempura coating comprises:
- wheat flour and corn flour, in a total amount of flour between 60 and 95% by weight, preferably between 70 and 90% by weight;
- starch, preferably wheat starch, in an amount between 1 and 20% by weight, preferably between 1 and 10% by weight
- raising agent, preferably E450 and E500, in a total amount between 1 and 20% by weight, preferably between 1 and 10% by weight
- herbs and spices, preferably salt, white pepper, and turmeric, in a total amount between 1 and 20% by weight, preferably between 1 and 10% by weight
- vegetable oil, preferably canola oil, in an amount between 1 and 20% by weight, preferably between 1 and 10% by weight
- milk protein, preferably whey protein powder, in an amount between 1 and 20% by weight, preferably between 1 and 10% by weight

In a preferred embodiment, the tempura mix further comprises maltodextrin, preferably maltodextrin derived from wheat. Preferably, the tempura mix comprises maltodextrin in an amount between 1 and 20% by weight, preferably between 1 and 10% by weight.

In a particularly preferred embodiment, the tempura coating consists substantially of wheat flour, corn flour, starch, preferably wheat starch, raising agent, preferably E450 and E500, herbs and spices, preferably salt, white pepper, and turmeric, vegetable oil, preferably canola oil, milk protein, preferably whey protein powder and maltodextrin.

In what follows, the invention is described by way of non-limiting examples illustrating the invention, and which are not intended to and should not be interpreted as limiting the scope of the invention.

### EXAMPLES

EXAMPLE 1: producing a chicken nugget by coating a deep-fried snack with a tempura.

A chicken nugget is produced by coating a deep-fried snack, obtained by forming a chicken-based meat dough into a compact flat shape, with a tempura. Compact flat shape means a shape with maximum dimensions of 5 cm x 4 cm x 1.5 cm.

In the first step, a tempura mix and water and ice are provided. The percentages of these ingredients may change as long as they fall within the limits below, and as long as the Bostwick viscosity value of the tempura after mixing the ingredients as described below at a temperature of 10 to 14°C is between 20 and 27 cm/30 s.

This tempura mix is placed in a mixing vessel in which the tempura mix can be mixed with water and ice. A scraper is placed in the mixing vessel which can rotate in the mixing vessel at a low speed. For example, the speed is set to 27 rpm and ensures that the ingredients do not stick while adding these ingredients to the vessel for mixing.

When the tempura mix and the water and ice have been added to the mixing vessel, a mixer is started in the mixing vessel to mix the ingredients into a homogeneous tempura. The mixer is set at a speed of 1250 and 1750 rpm, preferably about 1500 rpm. After mixing for about 10 minutes, a homogeneous tempura is obtained. Mixing preferably continues until a homogeneous tempura is obtained with a Bostwick viscosity value between 20 and 27 cm/30 s at a temperature of 10 to 14°C. Preferably the viscosity value is approximately 23.5 cm/30 s and the temperature is at most 12°C.

In a next step, the tempura is pumped from the mixing vessel to a batter applicator. If the tempura has stood still for a while before being pumped to the batter applicator, the tempura will be mixed again before pumping to obtain a nice homogeneous tempura again.

Pumping into the batter applicator is done using a flexible impeller pump (FIP 50S Johnson Pump). This pump guarantees a very constant flow of the tempura to the batter applicator and is extremely suitable for pumping viscous foodstuffs. The tempura ends up in the batter applicator in a dipping bath.

The amount of tempura in the batter applicator is monitored, wherein pumping of the tempura to or into the batter applicator from the mixing vessel starts when the amount of tempura in the applicator falls below a predefined working amount. As a result, filling the batter applicator is automated, and the level and the flow to the applicator can be easily maintained constant.

The deep-fried snacks are placed on a first conveyor belt that moves through the dipping bath, so that the deep-fried snacks are guided through the tempura in the dipping bath and provided with a tempura coating. A second conveyor belt is positioned on top of the first conveyor belt, so that the deep-fried snacks are clamped between the two conveyor belts, which preferably move at the same speed.

Both the impeller pump and the conveyor belt are equipped with one or more variable-frequency drives, suitable for controlling the drive of these pumps/conveyors. These are more accurate than the commonly used mechanical adjustable-speed drives.

In this way, a deep-fried snack is obtained that is completely covered with a homogeneous layer of tempura, where the tempura adheres nicely to the surface of the snack and by choosing the ideal viscosity and temperature, the tempura adheres well to the snack.

The present invention should not be construed as being limited to the embodiments described above and certain modifications or changes may be added to the examples described without having to re-evaluate the appended claims.

### EXAMPLES 2-8:

A tempura mix comprising wheat flour and corn flour, wheat starch, raising agents E450 and E500, salt, white pepper, and turmeric, canola oil, whey protein powder, and maltodextrin was mixed with a total amount of water and ice in a ratio of 0.77/1. The inventors discovered that this ratio is advantageous for obtaining a good thickness of the tempura. Different water/ice ratios were tested:

| | Tempura mix | Water (approx. 8°C) | Ice (< 0.5°C) | Water/ice ratio |
|---|---|---|---|---|
| Example 2 | 100 kg | 106 liters | 22.5 kg | 4.7 |
| Example 3 | 100 kg | 102 liters | 26.5 kg | 3.8 |
| Example 4 | 100 kg | 97 liters | 31.5 kg | 3.1 |
| Example 5 | 100 kg | 107.5 liters | 21.0 kg | 5.1 |
| Example 6 | 100 kg | 110 liters | 18.5 kg | 5.9 |
| Example 7 | 100 kg | 106 liters | 22.5 kg | 4.1 |
| Example 8 | 100 kg | 106 liters | 22.5 kg | 4.9 |

The prepared tempura was used to coat chicken nuggets and fried for 3 minutes at 170°C.

The chicken nuggets of examples 2, 7 and 8 were approved by the inventors. These had a golden-yellow tempura coating that was crispy and adhered well around the nugget. In addition, the coating did not break open during frying.

The inventors found that in examples 5 and 6 the tempura was too cold. The nugget is too heavy and thick due to the lumpy tempura coating. The nugget does not have the light, airy texture that is characteristic of tempura. When biting there is a lack of the expected crispiness. Instead, the batter is slightly doughy and heavy. This texture indicates an excessive amount of ice in the batter, which resulted in an overly cold and thick consistency during frying. Taste-wise, the nugget has also been influenced. The thickness of the batter and uneven cooking may have absorbed more oil, making the nugget oilier than desired. This affects not only the texture, but also the overall taste, causing the fine nuances of the tempura to be lost.

The inventors found that in examples 3 and 4 the tempura was too warm. The tempura coating was uneven and thin, resulting in an appearance where some parts of the nugget are less covered. The nugget did not have the typical crispy and light texture of tempura. Instead, the nugget was limp and not fully crispy. When biting into the nugget, it turned out that it did not have the characteristic crunch, and the nugget generally feels heavier and oilier due to higher oil absorption. The excess of oil overpowers the subtle flavors of the batter, leading to a less pronounced flavor profile. In addition, cooking consistency varies, with parts of the nugget being well cooked and other parts being too soft or too hard, affecting the overall eating experience.

## Claims

1. A method for making a deep-fried snack provided with a tempura coating, comprising the steps of:
- mixing a tempura mix with water and ice to form a homogeneous tempura using a mixer in a mixing vessel, wherein the tempura mix comprises wheat flour, corn flour, starch, raising agent, herbs and spices;
- pumping the homogeneous tempura or part of the tempura from the mixing vessel into a batter applicator by means of a pump system, wherein the tempura is collected in a dipping bath provided in the batter applicator; and
- immersing a deep-fried snack in the dipping bath, wherein the deep-fried snack is guided through the tempura in the dipping bath by means of at least one conveyor belt;
whereby the homogeneous tempura has a temperature between 10°C and 14°C after mixing, and a Bostwick viscosity value between 20 and 27 cm/30 s.

2. Method according to claim 1, wherein the mixer for mixing the tempura mix with water and ice mixes at a speed of between 1250 and 1750 rpm, preferably between 1400 and 1600 rpm, for 8 to 12 minutes.

3. Method according to any one of the preceding claims, wherein the pump system used to pump the tempura into the batter applicator is a flexible impeller pump.

4. Method according to any one of the preceding claims, wherein the water has a maximum temperature of 10°C, preferably at most 8°C.

5. Method according to any one of the preceding claims, wherein the deep-fried snack is guided through the tempura in the dipping bath by means of two conveyor belts, wherein the two conveyor belts are suitable for clamping the deep-fried snack.

6. Method according to any one of the preceding claims, wherein the deep-fried snack is a chicken nugget.

7. Method according to any one of the preceding claims, wherein the water and the ice are mixed in a mutual mass ratio between 4/1 and 5/1.

8. Method according to any one of the preceding claims, wherein the tempura mix is mixed with a total amount of water and ice in a mass ratio between 0.5/1 and 1/1, preferably between 0.7/1 and 0.85/1.

9. Method according to any one of the preceding claims, wherein in step a. the tempura mix, water and ice are mixed in a composition of:
- tempura mix, in an amount between 40 and 50% by weight;
- water, in an amount between 40 and 50% by weight;
- ice, in an amount between 5 and 15% by weight.

10. Method according to any one of the preceding claims, wherein the tempura mix comprises:
- wheat flour and corn flour, in a total amount of flour between 60 and 95% by weight, preferably between 70 and 90% by weight;
- starch, preferably wheat starch, in an amount between 1 and 20% by weight, preferably between 1 and 10% by weight,
- raising agent, preferably E450 and E500, in an amount between 1 and 20% by weight, preferably between 1 and 10% by weight,
- herbs and spices, preferably salt, white pepper, and turmeric, in an amount between 1 and 20% by weight, preferably between 1 and 10% by weight,
- vegetable oil, preferably canola oil, in an amount between 1 and 20% by weight, preferably between 1 and 10% by weight,
- milk protein, preferably whey protein powder, in an amount between 1 and 20% by weight, preferably between 1 and 10% by weight.

11. Method according to any one of the preceding claims, wherein the tempura mix further comprises maltodextrin, preferably in an amount between 1 and 10% by weight.

12. A deep-fried snack provided with a tempura coating, wherein the tempura coating comprises at least wheat flour, corn flour, starch, raising agent, herbs and spices, and water, wherein the deep-fried snack is produced by a method according to any one of the claims 1-11.

13. Deep-fried snack according to claim 12, wherein the tempura coating comprises wheat flour, corn flour, wheat starch, raising agent E450 and raising agent E500, salt, white pepper, turmeric, canola oil and milk protein.

14. Deep-fried snack according to claim 12, wherein the tempura coating comprises:
- wheat flour and corn flour, in a total amount of flour between 60 and 95% by weight, preferably between 70 and 90% by weight;
- starch, preferably wheat starch, in an amount between 1 and 20% by weight, preferably between 1 and 10% by weight,
- raising agent, preferably E450 and E500, in an amount between 1 and 20% by weight, preferably between 1 and 10% by weight,
- herbs and spices, preferably salt, white pepper, and turmeric, in an amount between 1 and 20% by weight, preferably between 1 and 10% by weight,
- vegetable oil, preferably canola oil, in an amount between 1 and 20% by weight, preferably between 1 and 10% by weight,
- milk protein, preferably whey protein powder, in an amount between 1 and 20% by weight, preferably between 1 and 10% by weight.

## Patentansprüche

1. Verfahren zur Herstellung eines frittierten Snacks mit einem Tempuraüberzug, die folgenden Schritte umfassend:
- Mischen einer Tempuramischung mit Wasser und Eis unter Verwendung eines Mixers in einem Mischgefäß, um ein homogenes Tempura zu bilden, wobei die Tempuramischung Weizenmehl, Maismehl, Stärke, Backtriebmittel, Kräuter und Gewürze umfasst,
- Pumpen des homogenen Tempura oder eines Teils des Tempura aus dem Mischgefäß in ein Teigauftragsgerät mittels eines Pumpsystems, wobei das Tempura in einem Tauchbad gesammelt wird, das in dem Teigauftragsgerät bereitgestellt ist, und
- Eintauchen eines frittierten Snacks in das Tauchbad, wobei der frittierte Snack mittels mindestens eines Förderbandes durch das Tempura in dem Tauchbad geführt wird,
wobei das homogene Tempura nach dem Mischen eine Temperatur zwischen 10°C und 14°C und einen Bostwick-Viskositätswert zwischen 20 und 27 cm/30 s aufweist.

2. Verfahren nach Anspruch 1, wobei der Mixer zum Mischen der Tempuramischung mit Wasser und Eis 8 bis 12 Minuten lang mit einer Geschwindigkeit zwischen 1250 und 1750 U/min mischt, vorzugsweise zwischen 1400 und 1600 U/min.

3. Verfahren nach einem der vorhergehenden Ansprüche, wobei das Pumpsystem, das zum Pumpen des Tempura in das Teigauftragsgerät verwendet wird, eine flexible Impellerpumpe ist.

4. Verfahren nach einem der vorhergehenden Ansprüche, wobei das Wasser eine maximale Temperatur von 10°C, vorzugsweise höchstens 8°C aufweist.

5. Verfahren nach einem der vorhergehenden Ansprüche, wobei der frittierte Snack mittels mindestens zweier Förderbänder durch das Tempura in dem Tauchbad geführt wird, wobei die zwei Förderbänder zum Festklemmen des frittierten Snacks geeignet sind.

6. Verfahren nach einem der vorhergehenden Ansprüche, wobei der frittierte Snack ein Chicken-Nugget ist.

7. Verfahren nach einem der vorhergehenden Ansprüche, wobei das Wasser und das Eis in einem gegenseitigen Massenverhältnis zwischen 4:1 und 5:1 gemischt werden.

8. Verfahren nach einem der vorhergehenden Ansprüche, wobei die Tempuramischung mit einer Gesamtmenge von Wasser und Eis in einem Massenverhältnis zwischen 0,5:1 und 1:1 gemischt wird, vorzugsweise zwischen 0,7:1 und 0,85:1.

9. Verfahren nach einem der vorhergehenden Ansprüche, wobei in Schritt a. die Tempuramischung, Wasser und Eis in folgender Zusammensetzung gemischt werden:
- Tempuramischung in einer Menge zwischen 40 und 50 Gew. %,
- Wasser in einer Menge zwischen 40 und 50 Gew. %,
- Eis in einer Menge zwischen 5 und 15 Gew. %.

10. Verfahren nach einem der vorhergehenden Ansprüche, wobei die Tempuramischung Folgendes umfasst:
- Weizenmehl und Maismehl in einer Mehlgesamtmenge zwischen 60 und 95 Gew. %, vorzugsweise zwischen 70 und 90 Gew. %,
- Stärke, vorzugsweise Weizenstärke, in einer Menge zwischen 1 und 20 Gew. %, vorzugsweise zwischen 1 und 10 Gew. %,
- Backtriebmittel, vorzugsweise E450 und E500, in einer Menge zwischen 1 und 20 Gew. %, vorzugsweise zwischen 1 und 10 Gew. %,
- Kräuter und Gewürze, vorzugsweise Salz, weißer Pfeffer und Kurkuma in einer Menge zwischen 1 und 20 Gew. %, vorzugsweise zwischen 1 und 10 Gew. %,
- Pflanzenöl, vorzugsweise Rapsöl, in einer Menge zwischen 1 und 20 Gew. %, vorzugsweise zwischen 1 und 10 Gew. %,
- Milcheiweiß, vorzugsweise Molkeproteinpulver, in einer Menge zwischen 1 und 20 Gew. %, vorzugsweise zwischen 1 und 10 Gew. %.

11. Verfahren nach einem der vorhergehenden Ansprüche, wobei die Tempuramischung ferner Maltodextrin umfasst, vorzugsweise in einer Menge zwischen 1 und 10 Gew. %.

12. Frittierter Snack, bereitgestellt mit einem Tempuraüberzug, wobei der Tempuraüberzug mindestens Weizenmehl, Maismehl, Stärke, Backtriebmittel, Kräuter und Gewürze und Wasser umfasst, wobei der tiefgekühlte Snack durch ein Verfahren nach einem der Ansprüche 1 bis 11 hergestellt wird.

13. Frittierter Snack nach Anspruch 12, wobei der Tempuraüberzug Weizenmehl, Maismehl, Weizenstärke, Backtriebmittel E450 und Backtriebmittel E500, Salz, weißen Pfeffer, Kurkuma, Rapsöl und Milchprotein umfasst.

14. Frittierter Snack nach Anspruch 12, wobei der Tempuraüberzug Folgendes umfasst:
- Weizenmehl und Maismehl in einer Mehlgesamtmenge zwischen 60 und 95 Gew. %, vorzugsweise zwischen 70 und 90 Gew. %,
- Stärke, vorzugsweise Weizenstärke, in einer Menge zwischen 1 und 20 Gew. %, vorzugsweise zwischen 1 und 10 Gew. %,
- Backtriebmittel, vorzugsweise E450 und E500, in einer Menge zwischen 1 und 20 Gew. %, vorzugsweise zwischen 1 und 10 Gew. %,
- Kräuter und Gewürze, vorzugsweise Salz, weißer Pfeffer und Kurkuma in einer Menge zwischen 1 und 20 Gew. %, vorzugsweise zwischen 1 und 10 Gew. %,
- Pflanzenöl, vorzugsweise Rapsöl, in einer Menge zwischen 1 und 20 Gew. %, vorzugsweise zwischen 1 und 10 Gew. %,
- Milcheiweiß, vorzugsweise Molkeproteinpulver, in einer Menge zwischen 1 und 20 Gew. %, vorzugsweise zwischen 1 und 10 Gew. %.

## Revendications

1. Procédé de fabrication d'un en-cas frit doté d'un enrobage tempura, comprenant les étapes consistant à:
- mélanger un mélange tempura avec de l'eau et de la glace pour former un tempura homogène à l'aide d'un mélangeur dans un récipient de mélange, dans lequel le mélange tempura comprend de la farine de blé, de la farine de maïs, de l'amidon, un agent levant, des herbes et des épices;
- pomper le tempura homogène ou une partie du tempura à partir du récipient de mélange dans un applicateur de pâte à frire au moyen d'un système de pompe, dans lequel le tempura est recueilli dans un bain de trempage prévu dans l'applicateur de pâte à frire; et
- immerger un snack frit dans le bain de trempage, dans lequel le snack frit est guidé à travers le tempura dans le bain de trempage au moyen d'au moins une bande transporteuse;
moyennant quoi le tempura homogène a une température comprise entre 10°C et 14 C après mélange, et une valeur de viscosité de Bostwick comprise entre 20 et 27 cm/30 s.

2. Procédé selon la revendication 1, dans lequel le mélangeur pour mélanger le mélange tempura avec de l'eau et de la glace mélange à une vitesse comprise entre 1250 et 1750 tours/minute, de préférence entre 1400 et 1600 tours/minute, pendant 8 à 12 minutes.

3. Procédé selon l'une quelconque des revendications précédentes, dans lequel le système de pompe utilisé pour pomper le tempura dans l'applicateur de pâte à frire est une pompe à roue flexible.

4. Procédé selon l'une quelconque des revendications précédentes, dans lequel l'eau a une température maximale de 10°C, de préférence d'au plus 8°C.

5. Procédé selon l'une quelconque des revendications précédentes, dans lequel l'en-cas frit est guidé à travers le tempura dans le bain de trempage au moyen de deux bandes transporteuses, dans lequel les deux bandes transporteuses permettent de serrer l'en-cas frit.

6. Procédé selon l'une quelconque des revendications précédentes, dans lequel l'en-cas frit est un nugget de poulet.

7. Procédé selon l'une quelconque des revendications précédentes, dans lequel l'eau et la glace sont mélangées dans un rapport de masse mutuel compris entre 4/1 et 5/1.

8. Procédé selon l'une quelconque des revendications précédentes, dans lequel le mélange tempura est mélangé à une quantité totale d'eau et de glace dans un rapport de masse compris entre 0,5/1 et 1/1, de préférence entre 0,7/1 et 0,85/1.

9. Procédé selon l'une quelconque des revendications précédentes, dans lequel, à l'étape a., le mélange tempura, l'eau et la glace sont mélangés dans une composition de:
- mélange tempura, dans une proportion comprise entre 40 et 50% en poids;
- eau, dans une proportion comprise entre 40 et 50% en poids;
- glace, dans une proportion comprise entre 5 et 15% en poids.

10. Procédé selon l'une quelconque des revendications précédentes, dans lequel le mélange tempura comprend:
- farine de blé et farine de maïs, dans une quantité totale de farine comprise entre 60 et 95% en poids, de préférence entre 70 et 90% en poids;
- amidon, de préférence de l'amidon de blé, dans une proportion comprise entre 1 et 20% en poids, de préférence entre 1 et 10% en poids,
- agent levant, de préférence E450 et E500, dans une quantité comprise entre 1 et 20% en poids, de préférence entre 1 et 10% en poids,
- herbes et épices, de préférence du sel, du poivre blanc et du curcuma, dans une proportion comprise entre 1 et 20% en poids, de préférence entre 1 et 10% en poids,
- huile végétale, de préférence de l'huile de colza, dans une proportion comprise entre 1 et 20% en poids, de préférence entre 1 et 10% en poids,
- protéines de lait, de préférence des protéines de lactosérum en poudre, dans une proportion comprise entre 1 et 20% en poids, de préférence entre 1 et 10% en poids.

11. Procédé selon l'une quelconque des revendications précédentes, dans lequel le mélange tempura comprend en outre de la maltodextrine, de préférence dans une quantité comprise entre 1 et 10% en poids.

12. En-cas frit pourvu d'un enrobage tempura, dans lequel l'enrobage tempura comprend au moins de la farine de blé, de la farine de maïs, de l'amidon, un agent levant, des herbes et des épices, et de l'eau, dans lequel l'en-cas frit est produit par un procédé selon l'une quelconque des revendications 1 à 11.

13. En-cas frit selon la revendication 12, dans lequel l'enrobage tempura comprend de la farine de blé, de la farine de maïs, de l'amidon de blé, de l'agent levant E450 et de l'agent levant E500, du sel, du poivre blanc, du curcuma, de huile de canola et des protéines de lait.

14. En-cas frit selon la revendication 12, dans lequel l'enrobage tempura comprend:
- farine de blé et farine de maïs, dans une quantité totale de farine comprise entre 60 et 95% en poids, de préférence entre 70 et 90% en poids;
- amidon, de préférence de l'amidon de blé, dans une proportion comprise entre 1 et 20% en poids, de préférence entre 1 et 10% en poids,
- agent levant, de préférence E450 et E500, dans une quantité comprise entre 1 et 20% en poids, de préférence entre 1 et 10% en poids,
- herbes et épices, de préférence du sel, du poivre blanc et du curcuma, dans une proportion comprise entre 1 et 20% en poids, de préférence entre 1 et 10% en poids,
- huile végétale, de préférence de l'huile de colza, dans une proportion comprise entre 1 et 20% en poids, de préférence entre 1 et 10% en poids,
- protéines de lait, de préférence des protéines de lactosérum en poudre, dans une proportion comprise entre 1 et 20% en poids, de préférence entre 1 et 10% en poids.
